# EUROPÄISCHE PATENTSCHRIFT

(11) **EP 4 102 266 B1**
(45) Veröffentlichungstag und Bekanntmachung des Hinweises auf die Patenterteilung: **27.05.2026**
(21) Anmeldenummer: 21178037.4
(22) Anmeldetag: 07.06.2021
(51) Int. Cl.: G02B 3/08, G02B 27/00, B29D 11/00, B29C 45/14, B29C 45/16, F21S 41/25, B29C 35/08

(54) **VERFAHREN ZUR HERSTELLUNG EINES LINSENSYSTEMS**
METHOD FOR PRODUCING A LENS SYSTEM
PROCÉDÉ DE FABRICATION D'UN SYSTÈME DE LENTILLE

(43) Veröffentlichungstag der Anmeldung: 14.12.2022
(73) Patentinhaber: ZKW Group GmbH, 3250 Wieselburg (AT)
(72) Erfinder: Gürtl, Josef, 3233 Kilb (AT); Hacker, Alexander, 3150 Wilhelmsburg (AT)
(74) Vertreter: Patentanwaltskanzlei Matschnig & Forsthuber OG

(56) Entgegenhaltungen:
- EP-A1- 0 746 460
- DE-A1- 102020 119 043
- JP-A- H08 190 004
- US-A1- 2006 226 560
- US-A1- 2010 271 701
- US-A1- 2018 215 861

## Beschreibung

Die Erfindung ein Verfahren zur Herstellung eines Linsensystems gemäß Anspruch 1.

Die Erfindung betrifft weiters ein Linsensystem, umfassend eine erste Linse, welche aus einem ersten Material gebildet ist, welches einen ersten Brechungsindex aufweist, eine zweite Linse, welche aus einem zweiten Material gebildet ist, welches einen zweiten Brechungsindex aufweist, wobei das erste und das zweite Material und der erste und zweite Brechungsindex unterschiedlich sind. Erfindungsgemäß ist das Linsensystem dabei durch ein Verfahren nach Anspruch 1 hergestellt.

Die Erfindung betrifft weiters einen Kraftfahrzeugscheinwerfer.

Aus dem Stand der Technik sind gattungsgemäße Verfahren zur Herstellung von Linsensystemen bekannt. Da Linsensysteme üblicherweise aus mehreren Linsen, welche optisch zusammenwirken, aufgebaut sind, müssen bei der Herstellung von Linsensystemen die Fertigungstoleranzen der einzelnen Linsen miniert werden. Als Toleranz ist die Abweichung einer Größe (beispielsweise die ideale Form einer Linse) vom Normzustand zu verstehen, welche die Funktion eines Systems gerade noch nicht negativ beeinträchtigt. Bei Linsensystemen ist das Ausrichten der hergestellten Linsen relativ zu einander nachteiligerweise mit hohem Aufwand und Kosten verbunden. Ferner ist es aus Kostengründen wichtig, den Herstellungsprozess nicht nur möglichst genau, also mit minimalen Toleranzen, sondern auch rasch und effizient zu gestalten. Die Dokumente DE 10 2020 119043 A1, EP 0 746 460 A1 und JP H08 190004 A zeigen jeweils Verfahren zum Herstellen von Linsen gemäß dem Stand der Technik.

Die Aufgabe der vorliegenden Erfindung besteht darin, die Nachteile des Standes der Technik zu lindern bzw. zu beseitigen. Die Erfindung setzt sich daher insbesondere zum Ziel, ein Verfahren zur Herstellung eines Linsensystems zu schaffen, mit welchem die Herstellung des Linsensystems verbessert wird.

Diese Aufgabe wird durch ein Verfahren mit den Merkmalen von Anspruch 1 gelöst. Bevorzugte Ausführungen sind in den abhängigen Ansprüchen angegeben. Erfindungsgemäß weist das Verfahren die folgenden Schritte auf:
- Einbringen von Spritzgussmaterial in die Ausnehmungsform zum Formen einer zweiten Linse in dem Hohlraum, wobei die zweite Linse eine erste optisch aktive Fläche und eine zweite optisch aktive Fläche aufweist, wobei die zweite Linse an der ersten Linse derart geformt wird, dass die erste optisch aktive Fläche der zweiten Linse die erste optisch aktive Fläche der ersten Linse kontaktiert, wobei das Spritzgussmaterial, aus welchem die zweite Linse gebildet ist, ein zweites Material ist, welches einen zweiten Brechungsindex aufweist, wobei das erste Material von dem zweiten Material verschieden ist, wobei der erste Brechungsindex und der zweiten Brechungsindex derart unterschiedlich sind, dass die erste und zweite Linse ein achromatisches Linsensystem ausbilden, wobei das zweite Material ein mit UV-Licht aushärtbares Material ist, wobei die zweite Werkzeughälfte einen für UV-Licht durchlässigen Bereich aufweist, welcher derart ausgestaltet und dazu eingerichtet ist, dass UV-Licht von außerhalb der Spritzgussvorrichtung auf die zweite Linse gestrahlt werden kann,
- Bereitstellen einer UV-Lichtquelle,
- Aushärten der zweiten Linse durch Bestrahlung mit UV-Licht der UV-Lichtquelle, wobei das UV-Licht durch den UV-Licht durchlässigen Bereich der zweiten Werkzeughälfte auf die zweite Linse abgestrahlt wird, um diese auszuhärten.

Dadurch ergibt sich der Vorteil, dass die zweite Linse direkt auf einer ersten optisch aktiven Fläche der ersten Linse aufgebracht wird, wodurch die erste und zweite Linse, bzgl. ihrer Relativposition zueinander, exakt aufeinander abgestimmt sind. Ein nachträgliches Justieren der beiden Linsen relativ zueinander ist vorteilhafterweise nicht erforderlich. Ferner ergibt sich der Vorteil, dass durch das Aushärten der zweiten Linse mittels UV-Licht die Aushärtungsdauer und damit die Dauer des Herstellungsprozesses reduziert wird. Das zweite Material kann ein Epoxidharz oder Acrylat sein. Das erste Material kann ein Glas oder ein Polymethylmethacrylat sein. Die erste und zweite Linse bilden insbesondere ein achromatisches Linsensystem, wobei das Linsensystem auch mehr als zwei Linsen aufweisen kann. Die erste optisch aktive Fläche der ersten Linse und die erste optisch aktive Fläche der zweiten Linse sind vorzugsweise komplementär zueinander geformt. Mit anderen Worten ist die erste optisch aktive Fläche der ersten Linse die Negativform der ersten optisch aktiven Fläche der zweiten Linse. In diesem Zusammenhang sind die optisch aktiven Flächen einer Linse die beiden Flächen, auf welche Licht trifft und aus welcher Licht entweicht, wenn die Linse mit Licht angestrahlt wird. Beispielsweise sind bei einer bi-konvexen Linse die beiden gekrümmten Oberflächen, an welchen das Licht gebrochen wird, die optisch aktiven Flächen.

Es kann vorgesehen sein, dass die erste Linse eine konvexe, vorzugsweise ein bi-konvexe, Linse ist.

Es kann vorgesehen sein, dass die zweite Linse eine konkave, vorzugsweise eine bi-konkave, Linse ist.

Es kann vorgesehen sein, dass die Ausnehmungsform aus Silikon, vorzugsweise aus Polydimethylsiloxan, gebildet ist. Die zweite Ausnehmungsform ist vorzugsweise aus einem UV-lichtdurchlässigen Material gebildet. Bevorzugt ist die gesamte zweite Werkzeughälfte der Spritzgussvorrichtung aus einem UV-lichtdurchlässigen Material, beispielsweise aus Silikon, gebildet.

Es ist erfindungsgemäß vorgesehen, dass die Ausnehmungsform eine Abstufung aufweist, welche dergestalt ist, dass die aus Spritzgussmaterial geformte zweite Linse gegenüber einer in einer nicht abgestuften Ausnehmumgsform hergestellten Linse ein reduziertes Volumen aufweist. Eine Befüllung mit Spritzgussmaterial einer nicht abgestuften Ausnehmungsform kann beispielswiese eine bi-konvexe Linse ausbilden, wobei die abgestufte Ausnehungsform ein gegenüber der bi-konvexen Linse reduziertes Volumen aufweist.

Es kann vorgesehen sein, dass durch die Abstufung ein der ersten Linse abgewandter Abschnitt der zweiten Linse ein gegenüber einer nicht abgestuften Linse reduziertes Volumen aufweist. Insbesondere kann die abgestufte zweite Linse eine asymmetrische Linse sein, wobei die erste und zweite optische aktive Fläche der zweiten Linse eine unterschiedliche Form aufweisen können.

Es kann vorgesehen sein, dass der Kontakt der ersten optisch aktiven Fläche der zweiten Linse mit der ersten optisch aktiven Fläche der ersten Linse vollflächig, insbesondere spaltfrei, ist. Dadurch dass zwischen den Linsen kein Luftspalt ist, ergibt sich der Vorteil, dass es zu keinen unerwünschten Lichtstreuungen kommen kann. Zwischen den Linsen kann eine Schicht bzw. ein Film, welche(r) ein Haftmittel, beispielsweise Silikonöl, aufweist, aufgebracht sein, um eine bessere Haftung zwischen der ersten und zweiten Linse zu erreichen. Vorzugsweise wird die Haftmittelschicht bzw. der Haftmittelfilm auf die erste optisch aktive Fläche der ersten Linse aufgebracht, bevor die Spritzgussvorrichtung geschlossen wird. Das Haftmittel ist vorzugsweise transparent ausgebildet.

Es kann vorgesehen sein, dass die erste und zweite Linse im hergestellten Zustand des Linsensystems koaxial zueinander orientiert sind.

Weiters ist erfindungsgemäß vorgesehen, dass die Ausnehmungsform derart ausgestaltet ist, dass die zweite optisch aktive Fläche der zweiten Linse eine Fresnellinsen-artige Oberfläche aufweist. Dadurch ergibt sich der Vorteil, dass für die zweite Linse weniger Material benötigt wird, was wiederum die Herstellungskosten reduziert.

Erfindungsgemäß ist ein Linsensystem vorgesehen, umfassend eine erste Linse, welche aus einem ersten Material gebildet ist, welches einen ersten Brechungsindex aufweist, eine zweite Linse, welche aus einem zweiten Material gebildet ist, welches einen zweiten Brechungsindex aufweist, wobei das erste und das zweite Material und der erste und zweite Brechungsindex unterschiedlich sind, wobei das Linsensystem ein achromatisches Linsensystem ist, welches durch das erfindungsgemäße Verfahren hergestellt ist.

Es kann vorgesehen sein, dass das Linsensystem eine Vielzahl von Linsen aufweist, wobei zumindest zwei Linsen als ein achromatisches Linsensystem ausgebildet sind, welches durch das erfindungsgemäße Verfahren hergestellt ist.

Erfindungsgemäß ist ein Kraftfahrzeugscheinwerfer vorgesehen, umfassend eine Beleuchtungsvorrichtung zur Erzeugung und Abstrahlung einer Lichtverteilung, wobei die Beleuchtungsvorrichtung ein Linsensystem, welches durch das erfindungsgemäße Verfahren hergestellt ist, aufweist.

Im Rahmen dieser Beschreibung sind die Begriffe "oben", "unten", "horizontal", "vertikal" als Angaben der Ausrichtung zu verstehen, wenn die Spritzgussvorrichtung während dem Herstellungsverfahren in normaler Benutzungsstellung angeordnet ist.

Die Erfindung wird nachstehend anhand eines bevorzugten Ausführungsbeispiels, auf das sie jedoch nicht beschränkt sein soll, noch weiter erläutert. In den Zeichnungen zeigt:
Fig. 1 eine schematische Abbildung einer Spritzgussvorrichtung bei einem ersten Verfahrensschritt eines erfindungsgemäßen Verfahrens;
Fig. 2 eine schematische Abbildung der Spritzgussvorrichtung bei einem zweiten Verfahrensschritt;
Fig. 3 eine schematische Abbildung der Spritzgussvorrichtung bei einem dritten Verfahrensschritt;
Fig. 4 eine schematische Abbildung der Spritzgussvorrichtung bei einem vierten Verfahrensschritt;
Fig. 5 eine erste Ausführungsform eines Linsensystems, welches mit dem erfindungsgemäßen Verfahren hergestellt wurde; und
Fig. 6 eine zweite Ausführungsform eines Linsensystems, welches mit dem erfindungsgemäßen Verfahren hergestellt wurde.

Die Abbildungen sind schematisch und zur besseren Anschaulichkeit stark vereinfacht, wobei nicht wesentliche Elemente der Spritzgussvorrichtung nicht gezeigt sind.

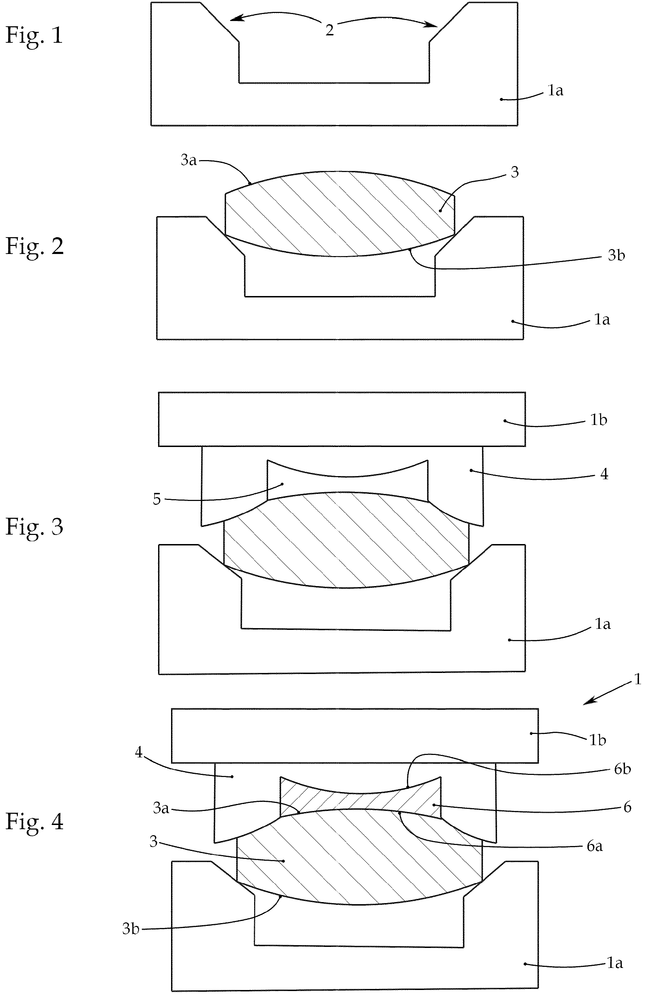

Fig. 1 zeigt einen ersten Verfahrensschritt eines Verfahrens zur Herstellung eines Linsensystems.

Der erste Schritt umfasst das Bereitstellen einer Spritzgussvorrichtung 1. Die Spritzgussvorrichtung 1 umfasst eine erste Werkzeughälfte 1a und zweite Werkzeughälfte 1b. Die Spritzgussvorrichtung 1 ist dazu eingerichtet, optische Linsen mittels einem Spritzgussverfahren herzustellen.

Die erste Werkzeughälfte 1a hat einen Halteabschnitt 2, welcher an einer der zweiten Werkzeughälfte 1b zugewandten Seite der ersten Werkzeughälfte 1a angeordnet ist. Der Halteabschnitt 2 ist dazu eingerichtet ist, eine Linse in einer vorgegebenen Position relativ zu der zweiten Werkzeughälfte 1b zu fixieren. Das Positionieren und Fixieren der ersten Linse erfolgt nach bestimmten Vorgaben, welche durch das herzustellende Linsensystem vorgegeben sind.

Das Verfahren umfasst den weiteren Schritt des Bereitstellens einer ersten Linse 3. Die erste Linse 3 ist aus einem ersten Material, welches einen ersten Brechungsindex aufweist, hergestellt und hat eine erste Außenform. Die erste Linse 3 kann beispielsweise aus Glas hergestellt sein. Bevorzugt ist die erste Linse eine konvexe, vorzugsweise ein bi-konvexe, Linse.

Fig. 2 zeigt einen weiteren Verfahrensschritt, welcher das Einbringen und Fixieren der ersten Linse 3 an dem Halteabschnitt 2 umfasst. Die erste Linse 3 wird in diesem Schritt an dem Haltabschnitt 2 der ersten Werkzeughälfte 1a positioniert und fixiert. Die erste Linse 3 wird derart an dem Halteabschnitt 2 fixiert, dass eine erste optisch aktive Fläche 3a der ersten Linse 3 der zweiten Werkzeughälfte 1b zugewandt und eine zweite optisch aktive Fläche 3b der ersten Linse 3 der zweiten Werkzeughälfte 1b abgewandt ist (vgl. Fig. 3).

Fig. 3 zeigt einen weiteren Verfahrensschritt, welcher das Schließen der Spritzgussvorrichtung umfasst. Das Schließen der Spritzgussvorrichtung erfolgt durch Zusammenführen der ersten 1a und zweiten Werkzeughälfte 1b.

Die zweite Werkzeughälfte 1b hat an einer der ersten Werkzeughälfte 1a zugewandten Seite eine Ausnehmungsform 4, wobei im geschlossenen Zustand der Spritzgussvorrichtung 1 zwischen der ersten Linse 3 und der Ausnehmungsform 4 ein mit Spritzgussmaterial befüllbarer Hohlraum 5 ausgebildet ist. Die Ausnehmungsform 4 kann auch als Füllform oder Spritzgussform bezeichnet werden. Die Ausnehmungsform 4 ist im Wesentlichen eine Ausnehmung in der zweiten Werkzeughälfte 1b, welche mit Spritzgussmaterial befüllbar ist. Die Ausnehmungsform 4 und/oder die zweite Werkzeughälfte 1b ist beispielswiese aus Silikon, vorzugsweise aus Polydimethylsiloxan, gebildet.

Der Hohlraum 5 ist als Negativform einer zweiten Außenform einer zweiten Linse 6 ausgestaltet, wobei die Außenform der ersten Linse 3 und die Außenform der zweiten Linse 6 unterschiedlich sind. Der Hohlraum 5 ist im Wesentlichen zwischen der Ausnehmungsform 4 der zweiten Werkzeughälfte 1b und der ersten optisch aktiven Fläche 3b der ersten Linse 3 ausgebildet. Die Spritzgussvorrichtung umfasst eine (nicht gezeigte) Zuführvorrichtung für Spritzgussmaterial, wobei die Zuführvorrichtung dazu eingerichtet ist, Spritzgussmaterial in den Hohlraum 5 zu befördern.

Fig. 4 zeigt einen weiteren Verfahrensschritt, welcher das Einbringen von Spritzgussmaterial in die Ausnehmungsform 4 umfasst. Durch das Einbringen von Spritzgussmaterial in die Ausnehmungsform 4 bzw. in den Hohlraum 5 wird eine zweiten Linse 6 aus Spritzgussmaterial in dem Hohlraum 5 geformt. Die zweite Linse 6 hat eine erste optisch aktive Fläche 6a und eine zweite optisch aktive Fläche 6b. Die zweite Linse 6 wird an der ersten Linse 3 derart geformt, dass die erste optisch aktive Fläche 6a der zweiten Linse 6 die erste optisch aktive Fläche 3a der ersten Linse 3 kontaktiert. Die zweite Linse 6 ist vorzugsweise eine konkave, insbesondere eine bi-konkave, Linse. Die erste 3 und zweite Linse 6 sind im hergestellten Zustand des Linsensystems insbesondere koaxial zueinander orientiert.

Der Kontakt der ersten optisch aktiven Fläche 6a der zweiten Linse 6 mit der ersten optisch aktiven Fläche 3a der ersten Linse 3 ist insbesondere vollflächig, vorzugsweise spaltfrei. Die erste optisch aktive Fläche 3a der ersten Linse 3 und die erste optisch aktive Fläche 6a der zweiten Linse 6 sind insbesondere komplementär zueinander ausgebildet.

Das Spritzgussmaterial, aus welchem die zweite Linse 6 gebildet ist, umfasst ein zweites Material, welches einen zweiten Brechungsindex aufweist. Das erste Material der ersten Linse ist von dem zweiten Material der zweiten Linse verschieden, wobei der erste Brechungsindex und der zweiten Brechungsindex derart unterschiedlich sind, dass die erste Linse 3 und die zweite Linse 6 ein achromatisches Linsensystem ausbilden. Das zweite Material ist ein mit UV-Licht aushärtbares Material.

Die zweite Werkzeughälfte 1b weist einen für UV-Licht durchlässigen Bereich auf, welcher derart ausgestaltet und dazu eingerichtet ist, dass UV-Licht von außerhalb der Spritzgussvorrichtung auf die zweite Linse 6 gestrahlt werden kann. Die zweite Werkzeughälfte kann beispielsweise vollständig aus einem UV-lichtdurchlässigen Material ausgebildet sein.

In einem weiteren Verfahrensschritt wird eine (nicht gezeigte) UV-Lichtquelle bereitgestellt.

Ein weiterer Verfahrensschritt umfasst das Aushärten der zweiten Linse 6 durch Bestrahlung mit UV-Licht der UV-Lichtquelle, wobei das UV-Licht durch den UV-Licht durchlässigen Bereich der zweiten Werkzeughälfte 1b auf die zweite Linse 6 abgestrahlt wird, um diese auszuhärten.

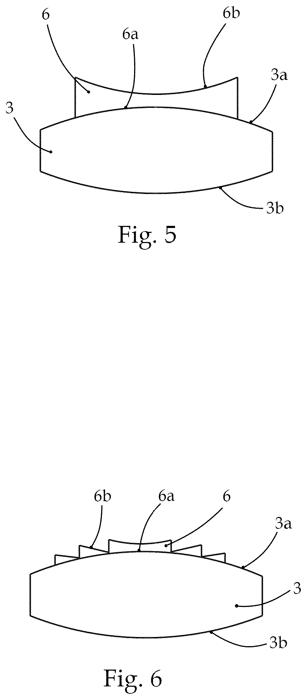

Fig. 5 zeigt ein Linsensystem, welches mit dem erfindungsgemäßen Verfahren hergestellt wurde, umfassend eine erste Linse 3, welche aus einem ersten Material gebildet ist und einen ersten Brechungsindex aufweist. Das Linsensystem umfasst weiters eine zweite Linse 6, welche aus einem zweiten Material gebildet ist und einen zweiten Brechungsindex aufweist.

Das erste und das zweite Material und der erste und zweite Brechungsindex sind unterschiedlich und derart gewählt, sodass das Linsensystem ein achromatisches Linsensystem ist. Mit anderen Worten bildet die erste Linse 3 und die zweite Linse 6 einen Achromaten.

Fig. 6 zeigt eine zweite Ausführungsform eines Linsensystems, welches mit dem erfindungsgemäßen Verfahren hergestellt wurde. Die Ausnehmungsform 4 hat eine Abstufung, welche dergestalt ist, dass die aus Spritzgussmaterial geformte zweite Linse 6 gegenüber einer in einer nicht abgestuften Ausnehmungsform (vgl. Fig. 3 und 4) hergestellten Linse ein reduziertes Volumen aufweist.

Die Abstufung der zweiten Linse 6 befindet sich an einem der ersten Linse 3 abgewandten Abschnitt der zweiten Linse 6. Der abgestufte Abschnitt weist ein gegenüber einer nicht abgestuften Linse reduziertes Volumen auf.

Die Ausnehmungsform 4 ist zur Bildung der zweiten Ausführungsform gemäß Fig. 6 derart ausgestaltet, dass die zweite optisch aktive Fläche 6b der zweiten Linse 6 eine Fresnellinsen-artige Oberfläche aufweist. Die erste optisch aktive Fläche 6a ist konkav ausgebildet und wird durch die konvexe Form der ersten Linse 3 definiert.

## Patentansprüche

1. Verfahren zur Herstellung eines Linsensystems, wobei das Verfahren die folgenden Schritte umfasst:
- Bereitstellen einer Spritzgussvorrichtung (1), umfassend eine erste (1a) und zweite Werkzeughälfte (1b), wobei die Spritzgussvorrichtung (1) dazu eingerichtet ist, optische Linsen mittels einem Spritzgussverfahren herzustellen, wobei die erste Werkzeughälfte (1a) an einer der zweiten Werkzeughälfte (1b) zugewandten Seite einen Halteabschnitt (2) aufweist, welcher dazu eingerichtet ist, eine Linse in einer vorgegeben Position relativ zu der zweiten Werkzeughälfte (1b) zu fixieren,
- Bereitstellen einer ersten Linse (3), wobei die erste Linse (3) aus einem ersten Material, welches einen ersten Brechungsindex aufweist, hergestellt ist und eine erste Außenform aufweist,
- Einbringen und Fixieren der ersten Linse (3) an dem Halteabschnitt (2), wobei die erste Linse (3) derart an dem Halteabschnitt (2) fixiert wird, dass eine erste optisch aktive Fläche (3a) der ersten Linse (3) der zweiten Werkzeughälfte (1b) zugewandt und eine zweite optisch aktive Fläche (3b) der ersten Linse (3) der zweiten Werkzeughälfte (1b) abgewandt ist,
- Schließen der Spritzgussvorrichtung durch Zusammenführen der ersten (1a) und zweiten Werkzeughälfte (1b), wobei die zweite Werkzeughälfte (1b) an einer der ersten Werkzeughälfte (1a) zugewandten Seite eine Ausnehmungsform (4) aufweist, wobei im geschlossenen Zustand der Spritzgussvorrichtung (1) zwischen der ersten Linse (3) und der Ausnehmungsform (4) ein mit Spritzgussmaterial befüllbarer Hohlraum (5) ausgebildet ist, wobei der Hohlraum (5) als Negativform einer zweiten Außenform einer zweiten Linse (6) ausgestaltet ist, wobei die erste Außenform der ersten Linse (3) und die zweite Außenform der zweiten Linse (6) unterschiedlich sind,
- Einbringen von Spritzgussmaterial in die Ausnehmungsform (4) zum Formen einer zweiten Linse (6) in dem Hohlraum (5), wobei die zweite Linse (6) eine erste optisch aktive Fläche (6a) und eine zweite optisch aktive Fläche (6b) aufweist, wobei die zweite Linse (6) an der ersten Linse (3) derart geformt wird, dass die erste optisch aktive Fläche (6a) der zweiten Linse (6) die erste optisch aktive Fläche (3a) der ersten Linse (3) kontaktiert, wobei das Spritzgussmaterial, aus welchem die zweite Linse (6) gebildet ist, ein zweites Material ist, welches einen zweiten Brechungsindex aufweist, wobei das erste Material von dem zweiten Material verschieden ist, wobei der erste Brechungsindex und der zweiten Brechungsindex derart unterschiedlich sind, dass die erste (3) und zweite Linse (6) ein achromatisches Linsensystem ausbilden, wobei die Ausnehmungsform (4) eine Abstufung aufweist, welche dergestalt ist, dass die aus Spritzgussmaterial geformte zweite Linse (6) gegenüber einer in einer nicht abgestuften Ausnehmungsform hergestellten Linse ein reduziertes Volumen aufweist,
**dadurch gekennzeichnet, dass** das zweite Material ein mit UV-Licht aushärtbares Material ist, wobei die zweite Werkzeughälfte (1b) einen für UV-Licht durchlässigen Bereich aufweist, welcher derart ausgestaltet und dazu eingerichtet ist, dass UV-Licht von außerhalb der Spritzgussvorrichtung auf die zweite Linse (6) gestrahlt werden kann,
- Bereitstellen einer UV-Lichtquelle,
- Aushärten der zweiten Linse (6) durch Bestrahlung mit UV-Licht der UV-Lichtquelle, wobei das UV-Licht durch den UV-Licht durchlässigen Bereich der zweiten Werkzeughälfte (1b) auf die zweite Linse (6) abgestrahlt wird, um diese auszuhärten, und wobei
die Ausnehmungsform (4) derart ausgestaltet ist, dass die zweite optisch aktive Fläche (6b) der zweiten Linse (6) eine fresnellinsen-artige Oberfläche aufweist.

2. Verfahren nach Anspruch 1, wobei die erste Linse (3) eine konvexe, vorzugsweise ein bi-konvexe, Linse ist.

3. Verfahren nach einem der vorhergehenden Ansprüche, wobei die zweite Linse (6) eine konkave, vorzugsweise eine bi-konkave, Linse ist.

4. Verfahren nach einem der vorhergehenden Ansprüche, wobei die Ausnehmungsform (4) aus Silikon, vorzugsweise aus Polydimethylsiloxan, gebildet ist.

5. Verfahren nach einem der vorhergehenden Ansprüche, wobei durch die Abstufung ein der ersten Linse (3) abgewandter Abschnitt der zweiten Linse (6) ein gegenüber einer nicht abgestuften Linse reduziertes Volumen aufweist.

6. Verfahren nach einem der vorhergehenden Ansprüche, wobei der Kontakt der ersten optisch aktiven Fläche (6a) der zweiten Linse (6) mit der ersten optisch aktiven Fläche (3a) der ersten Linse (3) vollflächig, insbesondere spaltfrei, ist.

7. Verfahren nach einem der vorhergehenden Ansprüche, wobei die erste (3) und zweite Linse (6) im hergestellten Zustand des Linsensystems koaxial zueinander orientiert sind.

8. Linsensystem, umfassend eine erste Linse (3), welche aus einem ersten Material gebildet ist, welches einen ersten Brechungsindex aufweist, eine zweite Linse (6), welche aus einem zweiten Material gebildet ist, welches einen zweiten Brechungsindex aufweist, wobei das erste und das zweite Material und der erste und zweite Brechungsindex unterschiedlich sind,
**dadurch gekennzeichnet, dass**
das Linsensystem ein achromatisches Linsensystem ist, welches durch ein Verfahren nach einem der Ansprüche 1 bis 7 hergestellt ist.

9. Linsensystem, umfassend eine Vielzahl von Linsen, **dadurch gekennzeichnet, dass** zumindest zwei Linsen als ein achromatisches Linsensystem ausgebildet sind, welches durch ein Verfahren nach einem der Ansprüche 1 bis 7 hergestellt ist.

10. Kraftfahrzeugscheinwerfer, umfassend eine Beleuchtungsvorrichtung zur Erzeugung und Abstrahlung einer Lichtverteilung, wobei die Beleuchtungsvorrichtung ein Linsensystem nach Anspruch 8, Anspruch 9 oder ein mit einem Verfahren nach einem der Ansprüche 1 bis 7 hergestelltes Linsensystem aufweist.

## Claims

1. Method for manufacturing a lens system, the method comprising the following steps:
- Providing an injection molding apparatus (1) comprising a first (1a) and a second (1b) mold half, wherein the injection molding apparatus (1) is adapted to manufacture optical lenses by means of an injection molding process, wherein the first mold half (1a) has, on a side facing the second mold half (1b), a holding portion (2) which is adapted to fix a lens in a predetermined position relative to the second mold half (1b),
- providing a first lens (3), wherein the first lens (3) is made of a first material having a first refractive index and has a first outer shape,
- inserting and fixing the first lens (3) to the holding section (2), wherein the first lens (3) is fixed to the holding portion (2) such that a first optically active surface (3a) of the first lens (3) faces the second mold half (1b) and a second optically active surface (3b) of the first lens (3) is turned away from the second mold half (1b),
- closing the injection molding device by bringing the first (1a) and second (1b) mold halves together, wherein the second mold half (1b) has a recessed mold cavity (4) on a side facing the first mold half (1a), and wherein, when the injection molding device (1) is closed, a cavity (5) capable of being filled with injection molding material is formed between the first lens (3) and the recess (4), wherein the cavity (5) is configured as a negative mold of a second outer shape of a second lens (6), wherein the first outer shape of the first lens (3) and the second outer shape of the second lens (6) are different,
- injecting injection molding material into the mold cavity (4) to form a second lens (6) in the cavity (5), wherein the second lens (6) has a first optically active surface (6a) and a second optically active surface (6b), wherein the second lens (6) is formed on the first lens (3) such that the first optically active surface (6a) of the second lens (6) contacts the first optically active surface (3a) of the first lens (3), wherein the injection-molded material from which the second lens (6) is formed is a second material having a second refractive index, wherein the first material is different from the second material, wherein the first refractive index and the second refractive index differ such that the first (3) and second lens (6) form an achromatic lens system, wherein the mold cavity (4) has a step such that the second lens (6) formed from injection molding material has a reduced volume compared to a lens produced in a non-stepped mold cavity,
**characterized in that** the second material is a UV-light-curable material, wherein the second mold half (1b) has a region permeable to UV light, which is configured and arranged such that UV light can be irradiated onto the second lens (6) from outside the injection molding apparatus,
- providing a UV light source,
- curing the second lens (6) by irradiating it with UV light from the UV light source, wherein the UV light is emitted through the UV-transmissive region of the second mold half (1b) onto the second lens (6) to cure it, and wherein
the recess shape (4) is designed such that the second optically active surface (6b) of the second lens (6) has a Fresnel-lens-like surface.

2. Method according to claim 1, wherein the first lens (3) is a convex, preferably a biconvex, lens.

3. Method according to any of the preceding claims, wherein the second lens (6) is a concave, preferably a biconvex, lens.

4. Method according to any of the preceding claims, wherein the mold (4) is formed from silicone, preferably from polydimethylsiloxane.

5. Method according to any of the preceding claims, wherein, due to the step, a portion of the second lens (6) facing away from the first lens (3) has a reduced volume compared to a non-stepped lens.

6. Method according to any of the preceding claims, wherein the contact between the first optically active surface (6a) of the second lens (6) and the first optically active surface (3a) of the first lens (3) is over the entire surface, in particular without a gap.

7. Method according to any of the preceding claims, wherein the first (3) and second (6) lenses are oriented coaxially with respect to one another in the manufactured state of the lens system.

8. Lens system comprising a first lens (3) formed from a first material having a first refractive index, a second lens (6), formed from a second material having a second refractive index, wherein the first and second materials and the first and second refractive indices are different,
**characterized in that**
the lens system is an achromatic lens system manufactured by a method according to any one of claims 1 to 7.

9. Lens system comprising a plurality of lenses, **characterized in that** at least two lenses are configured as an achromatic lens system produced by a method according to any one of claims 1 to 7.

10. Motor vehicle headlight comprising a lighting device for generating and emitting a light distribution, wherein the lighting device comprises a lens system according to claim 8, claim 9, or a lens system manufactured by a method according to any one of claims 1 to 7.

## Revendications

1. Procédé de fabrication d'un système de lentilles, ledit procédé comprenant les étapes suivantes :
- mise à disposition d'un dispositif de moulage par injection (1) comprenant une première moitié de moule (1a) et une deuxième moitié de moule (1b), ledit dispositif de moulage par injection (1) étant agencé pour fabriquer des lentilles optiques au moyen d'un procédé de moulage par injection, la première moitié de moule (1a) comportant, sur un côté tourné vers la deuxième moitié de moule (1b), une partie de retenue (2) qui est agencée pour fixer une lentille dans une position prédéterminée par rapport à la deuxième moitié de moule (1b),
- fournir une première lentille (3), la première lentille (3) étant fabriquée dans un premier matériau présentant un premier indice de réfraction et présentant une première forme extérieure,
- placer et fixer la première lentille (3) sur la partie de maintien (2), la première lentille (3) étant fixée à la partie de retenue (2) de telle sorte qu'une première surface optiquement active (3a) de la première lentille (3) soit tournée vers la deuxième moitié de moule (1b) et qu'une deuxième surface optiquement active (3b) de la première lentille (3) soit détournée de la deuxième moitié de moule (1b),
- fermeture du dispositif de moulage par injection par assemblage de la première moitié de moule (1a) et de la deuxième moitié de moule (1b), la deuxième moitié de moule (1b) présentant, sur un côté tourné vers la première moitié de moule (1a), une cavité (4), de sorte que, lorsque le dispositif de moulage par injection (1) est fermé, , un espace creux (5) pouvant être rempli de matière de moulage par injection est formé entre la première lentille (3) et la cavité (4), l'espace creux (5) étant conçu comme un moule négatif d'une deuxième forme extérieure d'une deuxième lentille (6), la première forme extérieure de la première lentille (3) et la deuxième forme extérieure de la deuxième lentille (6) étant différentes,
- injection de matière moulée par injection dans le moule (4) afin de former une deuxième lentille (6) dans la cavité (5), la deuxième lentille (6) comportant une première surface optiquement active (6a) et une deuxième surface optiquement active (6b), la deuxième lentille (6) étant moulée sur la première lentille (3) de telle sorte que la première surface optiquement active (6a) de la deuxième lentille (6) soit en contact avec la première surface optiquement active (3a) de la première lentille (3), le matériau moulé par injection à partir duquel la deuxième lentille (6) est formée étant un deuxième matériau présentant un deuxième indice de réfraction, le premier matériau étant différent du deuxième matériau, le premier indice de réfraction et le deuxième indice de réfraction étant différents de telle sorte que la première (3) et la deuxième lentille (6) forment un système de lentilles achromatique, la forme de l'évidement (4) présentant un gradin conçu de telle sorte que la deuxième lentille (6) moulée par injection présente un volume réduit par rapport à une lentille fabriquée dans une forme d'évidement sans gradin,
**caractérisé en ce que** le deuxième matériau est un matériau durcissable à la lumière UV, la deuxième moitié de moule (1b) comportant une zone perméable à la lumière UV, qui est conçue et agencée de telle sorte que de la lumière UV puisse être projetée sur la deuxième lentille (6) depuis l'extérieur du dispositif de moulage par injection,
- mise à disposition d'une source de lumière UV,
- durcissement de la deuxième lentille (6) par irradiation avec la lumière UV provenant de la source de lumière UV, la lumière UV étant projetée sur la deuxième lentille (6) à travers la zone perméable à la lumière UV de la deuxième moitié de l'outil (1b) afin de la durcir, et
la forme de l'évidement (4) est conçue de telle sorte que la deuxième surface optiquement active (6b) de la deuxième lentille (6) présente une surface de type lentille de Fresnel.

2. Procédé selon la revendication 1, dans lequel la première lentille (3) est une lentille convexe, de préférence une lentille biconvexe.

3. Procédé selon l'une des revendications précédentes, dans lequel la deuxième lentille (6) est une lentille concave, de préférence biconcave.

4. Procédé selon l'une des revendications précédentes, dans lequel la forme d'évidement (4) est réalisée en silicone, de préférence en polydiméthylsiloxane.

5. Procédé selon l'une des revendications précédentes, dans lequel, grâce au gradin, une partie de la deuxième lentille (6) opposée à la première lentille (3) présente un volume réduit par rapport à une lentille sans gradin.

6. Procédé selon l'une des revendications précédentes, dans lequel le contact entre la première surface optiquement active (6a) de la deuxième lentille (6) et la première surface optiquement active (3a) de la première lentille (3) est sur toute la surface, en particulier sans interstice.

7. Procédé selon l'une des revendications précédentes, dans lequel la première lentille (3) et la deuxième lentille (6) sont orientées coaxialement l'une par rapport à l'autre à l'état fini du système de lentilles.

8. Système de lentilles comprenant une première lentille (3) formée d'un premier matériau présentant un premier indice de réfraction, une deuxième lentille (6), formée d'un deuxième matériau présentant un deuxième indice de réfraction, les premier et deuxième matériaux et les premier et deuxième indices de réfraction étant différents,
**caractérisé en ce que**
le système de lentilles est un système de lentilles achromatique fabriqué selon un procédé selon l'une des revendications 1 à 7.

9. Système de lentilles comprenant une pluralité de lentilles, **caractérisé en ce qu'**au moins deux lentilles sont conçues comme un système de lentilles achromatique, qui est fabriqué selon un procédé selon l'une des revendications 1 à 7.

10. Projecteur de véhicule automobile comprenant un dispositif d'éclairage destiné à générer et à émettre une répartition lumineuse, le dispositif d'éclairage comportant un système de lentilles selon la revendication 8, la revendication 9 ou un système de lentilles fabriqué selon un procédé selon l'une des revendications 1 à 7.
